# EUROPÄISCHE PATENTANMELDUNG

(11) **EP 0 995 754 A2**
(43) Veröffentlichungstag der Anmeldung: **26.04.2000**
(21) Anmeldenummer: 99120687.1
(22) Anmeldetag: 19.10.1999
(51) Int. Cl.: C07F 7/18

(54) **Verfahren zur Herstellung von Organosiliciumdisulfanen**

(30) Priorität: 21.10.1998 DE 19848482
(71) Anmelder: Degussa-Hüls Aktiengesellschaft, 60287 Frankfurt am Main (DE)
(72) Erfinder: Michael, Rudolf, 63579 Freigericht (DE); Münzenberg, Jörg, Dr., 63457 Hanau (DE); van der Auwera, Carl, 9140 Temse (BE)

(57) **Zusammenfassung**

Organosiliciumdisulfane werden hergestellt, indem man Organosiliciumthiocyanate mit Alkalialkoholat zersetzt.

## Beschreibung

Die Erfindung betrifft ein Verfahren zur Herstellung von Organosiliciumdisulfanen.

Organosiliciumdisulfane werden bei der Hertellung von mit Kieselsäure gefüllten Kautschukartikeln eingesetzt. Von besonderem Interesse ist dabei die Verwendung von Organosiliciumdisulfanen mit einer hohen Reinheit (EP-A 0 732 362; L. Panzer, American Chem. Soc., Rubber Div. Meeting 1997).

Die Herstellung der Organosiliciumdisulfane mit hoher Reinheit ist für den Fachmann schwierig, weil bekannte Verfahren, wie zum Beispiel die Umsetzung von 3-Chlorpropyltriethoxysilan mit Na₂S₂ zu Produktgemischen mit Anteilen an Monosulfan beziehungsweise an langkettrigen Oligosulfanen führen. Diese Anteile sind jedoch unerwünscht, weil in der Anwendung Monosulfan inaktiv ist, und die langkettrigen Oligosulfane zu unerwünschten Effekten in den Mischprozessen führen.

Es ist bekannt, Organosiliciumdisulfane mit hoher Reinheit herzustellen, indem man Polysulfane mit Cyaniden, Phosphanen oder Sulfiten disulfuriert (EP-A 0 773 224).

Dieses Verfahren hat den Nachteil, daß zuerst ein Polysulfan, welches anschließend zu dem Disulfan abgebaut wird, hergestellt werden muß. Von weiterem Nachteil ist die Verwendung von toxischen Substanzen wie Cyanide und wie Phosphane.

Es ist weiterhin bekannt, Organosiliciumdisulfane herzustellen, indem man die entsprechenden Mercaptosilane mittels MnO₂ oder SO₂Cl₂ oxidiert (EP-A 0 718 392; DE-A 23 60 470).

Die bekannten Verfahren haben den Nachteil, daß als Edukt ein Mercaptosilan, das technisch aufwendig aus den entsprechenden Chloralkylsilanen und Thioharnstoff mit nachfolgender Spaltung des Thiruroniumsalzes hergestellt werden muß, eingesetzt wird.

Gegenstand der Erfindung ist ein Verfahren zur Herstellung von Organosiliciumdisulfanen, welches dadurch gekennzeichnet ist, daß man Organo Siliciumthiocyanate entweder in situ oder nach ihrer Isolierung in Gegenwart von Alkalialkoholaten zersetzt.

In einer Ausführungsform der Erfindung können die Organosiliciumdisulfane der allgemeinen Formel

Z-Alk-S₂-Alk-Z (I)

entsprechen,
in der Z für die Gruppierungen 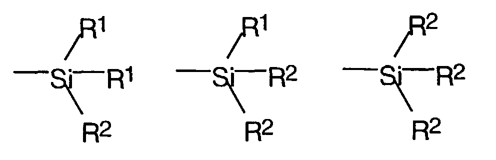 steht, in denen R¹ eine lineare oder verzweigte Alkylgruppe mit 1 - 5 C-Atomen, einen Cycloalkylrest mit 5 - 8 C-Atomen, den Benzylrest oder den gegebenenfalls durch Methyl, Ethyl oder Chlor substituierten Phenylrest darstellt, R² für eine Alkoxigruppe mit linearer oder verzweigter Kohlenstoffkette mit 1 - 5 C-Atomen oder für eine Cycloalkoxigruppe mit 5 - 8 C-Atomen, die Phenoxigruppe oder die Benzyloxigruppe steht, wobei R¹ und R² jeweils gleiche oder verschiedene Bedeutungen haben können, Alk einen zweiwertigen gesättigten linearen oder verzweigten Kohlenwasserstoffrest mit 1 - 10 C-Atomen oder die Gruppe 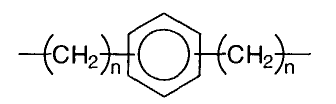 darstellt, wobei n = 1 bis 6 sein kann.

Als Thiocyanate können Verbindungen der Formel

Z-Alk-SCN (II),

in der Z und Alk die oben angegebenen Bedeutungen besitzen eingesetzt werden.

Als Alkalialkoholat können Verbindungen der Formel

R³O-Me (IV),

in der R³O für eine Alkoxigruppe mit linearer oder verzweigter Kohlenstoff-Kette und 1 bis 5 C-Atomen oder für eine Cycloalkoxigruppe mit 5 bis 8 C-Atomen, die Phenoxigruppe oder der Benzyloxigruppe steht und Me gleich Natrium oder Kalium ist, eingesetzt werden.

Bevorzugt kann die Alkoxigruppe R³O des Alkoholats dem Alkoxirest R¹ des Organosiliciumthiocyanats entsprechen.

In einer bevorzugten Ausführungsform der Erfindung können die erfindungsgemäß eingesetzte Thiocyanate nicht als isoliertes und gereinigtes Endprodukt verwendet werden, sondern in einer Eintopfreaktion als Rohprodukt ohne Isolierung nach der an sich bekannten Synthese aus Halogenorganosiliciuumverbindungen der Formel

Z-Alk-Hal (IV)

in der Z und Alk die oben angegebenen Bedeutungen besitzen und Hal ein Chlor-, Brom- oder Jodatom darstellt, und Alkalimetallthiocyanaten

Me-SCN (V)

wobei Me für Na, K oder Ammonium steht, eingesetzt werden.

Die Umsetzung der Organosilicumthiocyanate mit Alkalimetallalkoholaten kann in einem organischen Lösungsmittel stattfinden.

Als organische Lösungsmittel sind im Prinzip alle polaren Substanzen einsetzbar, die nicht mit der Organosiliciumverbindung gemäß Formel II reagieren.

Vorzugsweise können als organisches Lösungsmittel ein linearer oder verzweigter Alkohol mit 1 - 5 C-Atomen, wie zum Beispiel Methyl-, Ethyl-, Propyl-, Butyl- oder Pentylalkohol verwenden werden. Geeignet sind auch Cycloalkylalkohole mit 5 - 8 C-Atomen, Phenol oder Benzylalkohol.

Die Umsetzung kann sowohl unter atmosphärischen Druckbedingungen als auch unter erhöhten oder erniedrigtem Druck durchgeführt werden. Die für die Reaktion notwendige Temperatur liegt zwischen der Umgebungstemperatur und der Siedetemperatur des jeweiligen Lösungsmittels, die sich unter den verwendeten Druckbedingungen einstellt. Bevorzugter Weise wird die Reaktion zur Erreichung kurzer Reaktionszeit bei Temperaturen nahe dem Siedepunkt des verwendeten Lösungsmittels durchgeführt.

Man erhält mit dem erfindungsgemäßen Verfahren ein hochreines Disulfan, dessen Reinheit deutlich über dem gemäß EP-A 0 732 362 geforderten Wert für die Anwendung in mit Kieselsäure verstärktem Kautschuk von mindestens 80 % liegt und das auch die nach dem Stand der Technik hergestellten Produkte ohne weiteren Reinigungsschritt deutlich in bezug auf den Disulfidgehalt übertrifft.

### Beispiel 1

### Herstellung von Bis(3,3'-triethoxysilylpropyl)disulfan aus 3-Thiocyanatopropyltriethoxysilan

In einer Glasapparatur mit einem 500 ml Dreihalskolben, Tropftrichter und Rückflußkühler werden unter Stickstoff 2,3 g (0,10 mol) elementares Natrium in 100 ml Ethanol aufgelöst. Nachdem alles Natrium zu Natriumethylat abreagiert hat, wird das Gemisch auf Siedetemperatur erhitzt und bei Erreichen des Rückflusses 52,7 g (0,20 mol) 3-Thiocyanatopropyltriethoxysilan innerhalb von 30 min zugetropft. Nach Beendigung der Zugabe läßt man noch drei Stunden unter Rückfluß reagieren. Nach Abkühlen auf Raumtemperatur wird die gelbliche Lösung, die einen farblosen Niederschlag enthält, bei 80 °C im Vakuum (Endvakuum 40 mbar) eingedampft. Der farblose Niederschlag wird abfiltriert. Man erhält 39,6 g (0,08 mol) Bis(3,3'-triethoxysilylpropyl)disulfan (Ausbeute 83 %). Die Identität des Produkts wird durch ein ¹H-NMR-Spektrum bestätigt.

### Beispiel 2

### Herstellung von Bis(3,3'-triethoxysilylpropyl)disulfan aus 3-Chlorpropyltriethoxysilan, Natriumthiocyanat und Natriummethanolat

In einem Autoklaven wird 48,16 g (0,20 mol) 3-Chlorpropyltriethoxysilan zusammen mit 18,65 g (0,23 mol) Natriumthiocyanat in 100 ml Ethanol 10 h auf 120°C erhitzt. Nach Abkühlen wird das erhaltene Rohprodukt in der Apparatur des Beispiels 1 zu einer siedenden Natriumalkoholatat-Lösung, die aus 2,3 g (0,10 mol) elementarem Natrium und 50 ml Ethanol hergestellt wird, zugetropft. Nach vollständiger Zugabe wird noch weitere 3 h unter Rückfluß erhitzt, abgekühlt und anschließend filtriert. Der Filterkuchen wird zweimal mit jeweils 30 ml Ethanol gewaschen und anschließend die vereinigten Filtrate bei 80°C im Vakuum (Endvakuum 40 mbar) eingedampft. Nach erneuter Filtration des Eindampfrückstands erhält man 37,8 g (0,08 mol) Bis(3,3'-triethoxysilylpropyl) disulfan (Ausbeute bezogen auf 3-Chlorpropyltriethoxysilan 80 %). Die Identität und Reinheit des Produkts wird durch ein ¹H-NMR-Spektrum bestätigt.

## Patentansprüche

1. Verfahren zur Herstellung von Organosiliciumdisulfanen, dadurch gekennzeichnet, daß man Organosiliciumthiocyanate entweder in situ oder nach ihrer Isolierung in Gegenwart von Alkalialkoholaten zersetzt.
